# EUROPEAN PATENT APPLICATION

(11) **EP 4 424 166 A1**
(43) Date of publication of application: **04.09.2024**
(21) Application number: 22886824.6
(22) Date of filing: 19.10.2022
(51) Int. Cl.: A01N 35/04, A01N 27/00, A01N 31/04, A01N 35/02, A01N 37/02, A01P 17/00, A01P 19/00

(54) **METHOD FOR PRODUCING REPELLENT OR ATTRACTANT FOR ORGANISMS, REPELLENT OR ATTRACTANT FOR ORGANISMS, AND METHOD FOR REPELLING OR ATTRACTING ORGANISMS**

(30) Priority: 29.10.2021 JP 2021177300
(71) Applicant: Sony Group Corporation, Tokyo 108-0075 (JP)
(72) Inventor: INAGAKI, Yasuhito, Atsugi-shi, Kanagawa 243-0014 (JP); TAKI, Yuko, Tokyo 108-0075 (JP)
(74) Representative: D Young & Co LLP
(86) International application number: PCT/JP2022/038926
(87) International publication number: WO 2023/074496

(57) **Abstract**

Provided is technology capable of performing production through a simple method using an inexpensive raw material and stably exhibiting a repellent or attractant effect on organisms.

The present technology provides a method for producing a repellent or attractant for organisms in which an oxidative decomposition treatment step in which a part of a plastic is oxidatively decomposed is performed to make it possible to generate one or more substances selected from aldehydes, ketones, carboxylic acids, alcohols, and unsaturated bond compounds from the oxidatively decomposed plastic.

## Description

### [Technical Field]

The present technology relates to a method for producing a repellent or attractant for organisms. More specifically, the present technology relates to a method for producing a repellent or attractant for organisms, a repellent or attractant for organisms, and a method for repelling or attracting organisms, which are used in various indoor and outdoor places where people live.

### [Background Art]

Conventional repellents are generally produced by directly applying a substance that has a repellent effect on target organisms to a resin molded body or a resin sheet, directly adding it to a resin, carrying it on an inorganic porous material, or impregnating silicone microcapsules with it, and then adding it to a thermoplastic resin and kneading it.

For example, PTL 1 discloses a pest repellent composition containing 2-t-butyl-4-hydroxyanisole and (or) 3-t-butyl-4-hydroxyanisole, and a coating film-forming base resin. PTL 2 discloses an animal repellent consisting of: a biodegradable resin; at least one animal repellent substance selected from capsaicin, menthol, limonene, wood vinegar, bamboo vinegar, and mustard; and a liquid medium. PTL 3 discloses a mite repellent in which a specific amount of a specific aliphatic dibasic acid dialkyl ester is supported on an inorganic porous material having a specific surface area and a specific pore diameter.

On the other hand, with conventional attractants, it is common to solidify a substance that has an attracting effect on target organisms using a plant-based solidifying material or to support it on a thermoplastic resin.

For example, PTL 4 discloses a solid attractant for cryptomeria twig borer which is obtained by mixing one or more of benzyl acetate, methyl phenylacetate, methyl phenoxyacetate, methyl benzoate, ethyl benzoate, and anisyl acetate mixed with any one or more of a higher fatty acid ester, a higher alcohol, a starch-based polymer compound, and a plant resin.

### [Citation List]

### [Patent Literature]

[PTL 1]
   JP S56-115703A
[PTL 2]
   JP 2008-247767A
[PTL 3]
   WO 2015/194544
[PTL 4]
   JP H6-234603A

### [Summary]

### [Technical Problem]

However, when applying repellents and attractants to solids such as plant solids or resins, there is a problem in terms of persistence of repellent and attractant effects because the repellents and attractants dissolve in water and flow out of the solid surface. In addition, when adding repellents or attractants internally to plant materials resins, or the like and kneading them into solids, there is a problem that the repellent and attractant effects decrease because the repellents or attractants may thermally decompose or evaporate during kneading.

Furthermore, when kneading repellents or attractants into solids such as plant solids or resins, there is a problem that the repellent and attractant effects are inhibited because the repellents and attractants are encapsulated in the solids.

In addition, producing substances with a repellent or attractant effect requires extraction/purification from organisms, multi-stage chemical synthesis, or the like, which requires special equipment or a large number of steps in terms of production, resulting in issues from an economic perspective (high cost) and limiting the target organisms to be repelled or attracted to only desired organisms. In addition, there is also a problem that many of the substances that have a repellent or attractant effect are chemically unstable.

Therefore, a main object of the present technology is to provide technology with which manufacturing can be carried out through a simple method using inexpensive raw materials and that can stably exhibit a repellent or attractant effect on organisms.

### [Solution to Problem]

As described above, conventional repellents and attractants have been produced by extracting/purifying active ingredients from predetermined organisms, plants, or the like, or by chemically synthesizing a target substance to produce a substance having a repellent or attractant effect on organisms, and then immobilizing this substance on a solid such as a plant solid or a resin in some way. However, the inventors of the present application have made a drastic change in their conception, and conducted extensive studies on manufacturing technology for repellents or attractants that does not require immobilization. As a result, they have found that, by applying a specific treatment to a plastic that is already in a solid state, it becomes possible to generate a substance that has a repellent or attracting effect on organisms, thus leading to realization of the present technology.

That is, the present technology first provides a method for producing a repellent or attractant for organisms in which an oxidative decomposition treatment step in which a part of a plastic is oxidatively decomposed is performed to make it possible to generate one or more substances selected from aldehydes, ketones, carboxylic acids, alcohols, and unsaturated bond compounds from the oxidatively decomposed plastic.

In the oxidative decomposition treatment step in the production method according to the present technology, the oxidative decomposition proceeds by exposing the plastic to one or more selected from light, a gas, a liquid, and heat that can oxidatively decompose the plastic.

The light in this case may include light with a wavelength of 10⁻⁶ to 800 nm.

In addition, the gas may include oxygen and/or ozone.

Furthermore, as the liquid, one or more liquids selected from water, sea water, and a hydrogen peroxide solution can be used.

As the plastic used in the production method according to the present technology, a radically polymerized polymer can be used.

In this case, as the radically polymerized polymer, one or more polymers selected from polyethylene, polypropylene, polystyrene, and polyvinyl chloride can be used.

In addition, as the plastic used in the production method according to the present technology, a molded body molded through one or more molding methods selected from injection molding, sheet molding, blow molding, vacuum molding, foam molding, and pressure molding can be used.

In this case, a used molding-processed body can be used as the molded body, and a molding-processed body that has been discarded to the ocean or a river can also be used as the used molding-processed body.

The aldehydes, the ketones, the carboxylic acids, the alcohols, and the unsaturated bond compounds that can be generated from the oxidatively decomposed plastic can be set to have 6 to 30 carbon atoms.

In the production method according to the present technology, by oxidatively decomposing the plastic or a molded body in which the plastic is used, 0.001 to 10,000 pL/L of one or more substances selected from aldehydes, ketones, carboxylic acids, alcohols, and unsaturated bond compounds can be generated.

In the production method according to the present technology, an unnecessary component removal step of removing an unnecessary component from the plastic can be performed.

In this case, in the unnecessary component removal step, a volatile component can be removed by heating the plastic, and the temperature for the heat treatment in this case can be set to 100°C to 300°C.

In addition, the heat treatment can be performed through one or more methods selected from melt kneading, heat pressing, injection molding, sheet molding, blow molding, vacuum molding, foam molding, pressure molding, hot air treatment, hot water treatment, hot oil treatment, and heating through exposure to sunlight.

In the production method according to the present technology, a pulverizing step or a cutting step of pulverizing or cutting the plastic or a molded body in which the plastic is used can be performed.

In this case, the pulverized product after the pulverizing step and the cut product after the cutting step can be set to have a particle diameter of 0.1 to 50 mm.

The present technology next provides a repellent or attractant for organisms, including: a plastic of which a part is oxidatively decomposed to make it possible to generate one or more substances selected from aldehydes, ketones, carboxylic acids, alcohols, and unsaturated bond compounds.

The present technology further provides a method for repelling or attracting organisms in which an oxidative decomposition treatment step in which a part of a plastic is oxidatively decomposed is performed to make it possible to generate one or more substances selected from aldehydes, ketones, carboxylic acids, alcohols, and unsaturated bond compounds from the oxidatively decomposed plastic.

Here, technical terms according to the present technology will be defined.

The expression "to make it possible to generate one or more substances selected from aldehydes, ketones, carboxylic acids, alcohols, and unsaturated bond compounds from the oxidatively decomposed plastic" may refer to a state where the substances are held by the oxidatively decomposed plastic and also includes a state where the oxidative decomposition treatment step is triggered to gradually produce the substances through gradual oxidative decomposition.

### [Brief Description of Drawings]

[Fig. 1]

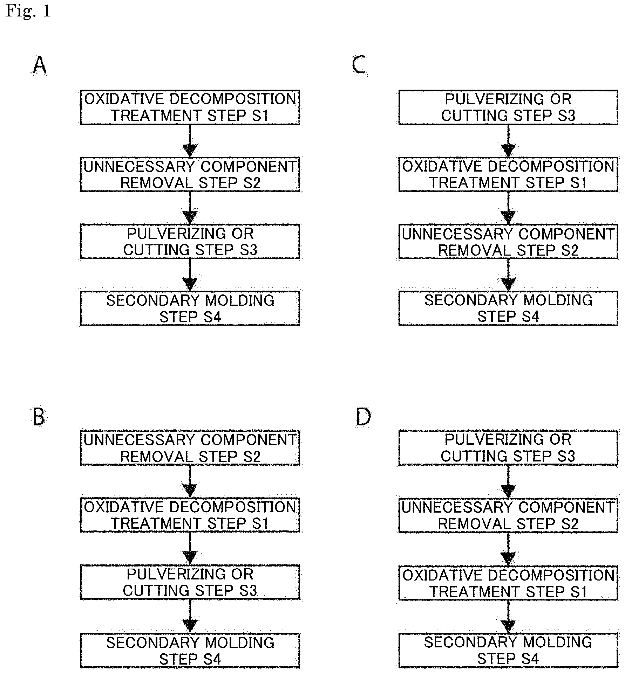

   Fig. 1 shows specific examples of flowcharts of a method for producing a repellent or attractant for organisms according to the present technology.
[Fig. 2]

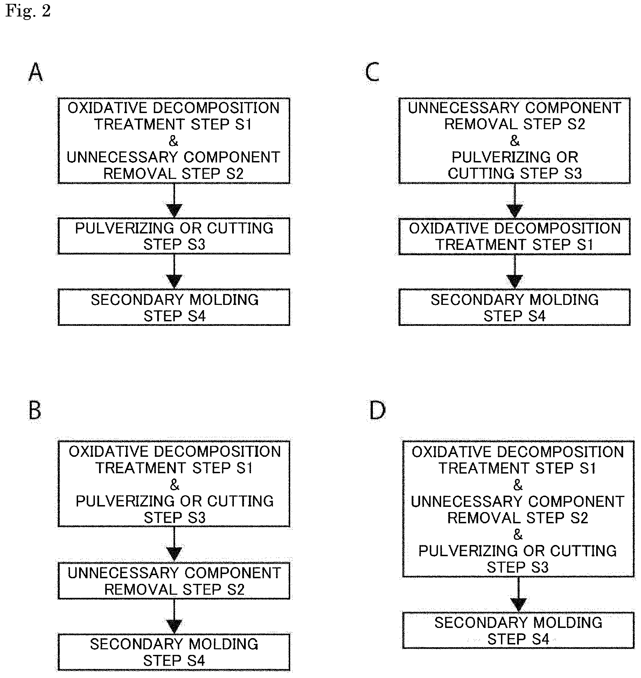

   Fig. 2 shows specific examples of flowcharts of the method for producing a repellent or attractant for organisms according to the present technology.
[Fig. 3]

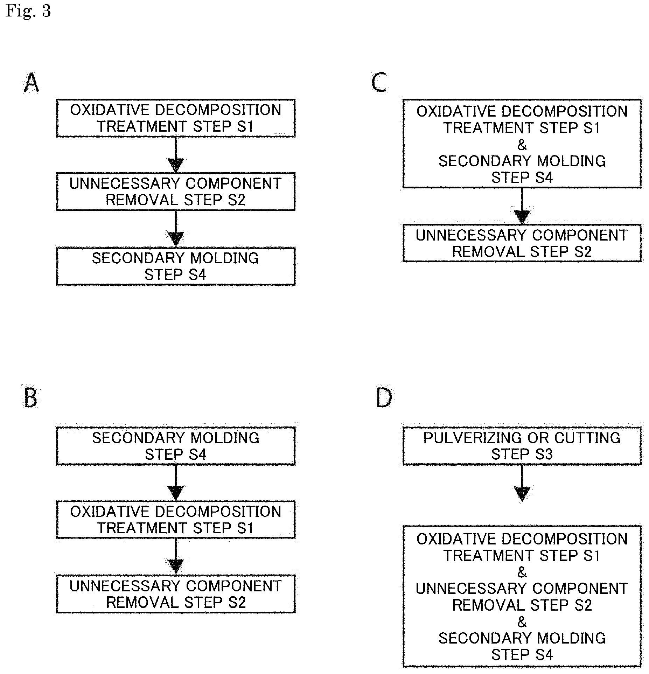

   Fig. 3 shows specific examples of flowcharts of the method for producing a repellent or attractant for organisms according to the present technology.
[Fig. 4]

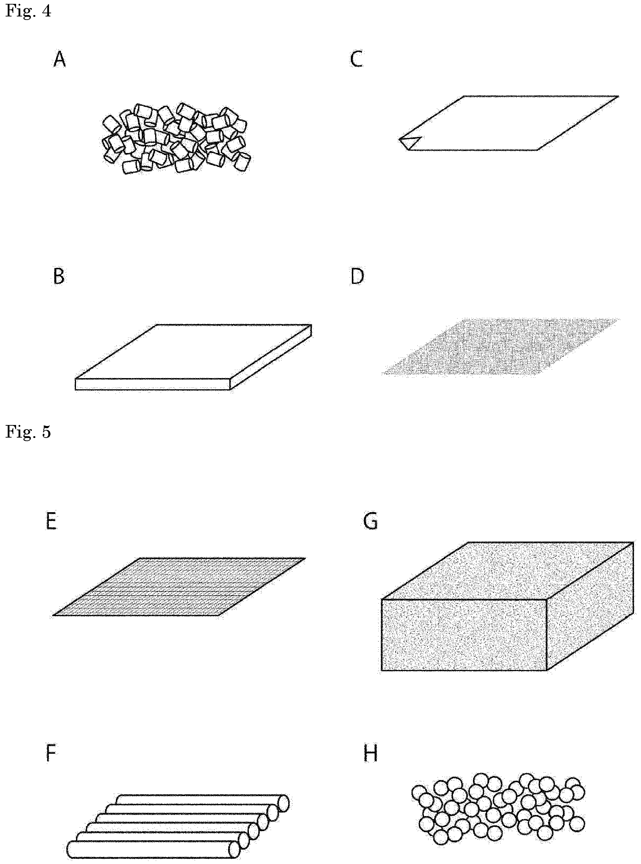

   Fig. 4 shows schematic diagrams schematically illustrating specific examples of shapes of a repellent or attractant for organisms according to the present technology.
[Fig. 5]
   Fig. 5 shows schematic diagrams schematically illustrating specific examples of shapes of the repellent or attractant for organisms according to the present technology.
[Fig. 6]

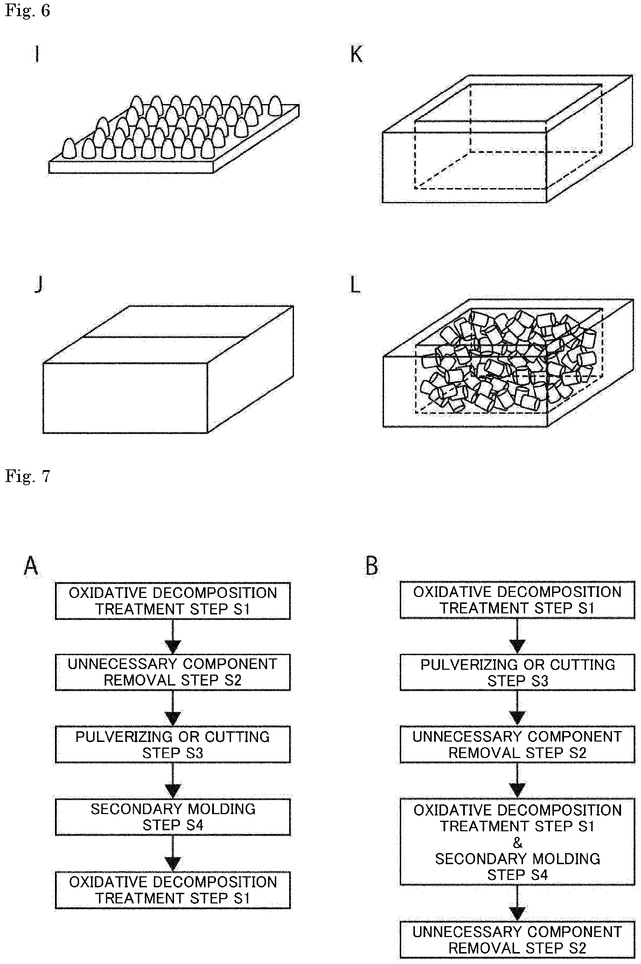

   Fig. 6 shows schematic diagrams schematically illustrating specific examples of shapes of the repellent or attractant for organisms according to the present technology.
[Fig. 7]
   Fig. 7 shows specific examples of flowcharts of the method for producing a repellent or attractant for organisms according to the present technology.

### [Description of Embodiments]

Hereinafter, a suitable aspect for implementing the present technology will be described. The embodiment which will be described below shows an example of a representative embodiment of the present technology, and the scope of the present technology should not be narrowly interpreted on the basis of this. Here, description will proceed in the following order.
1. Method for producing repellent or attractant for organisms
   (1) Oxidative decomposition treatment step S1
   (2) Unnecessary component removal step S2
   (3) Pulverizing or cutting step S3
   (4) Secondary molding step S4
2. Repellent or attractant for organisms
3. Method for repelling or attracting organisms

### 1. Method for producing repellent or attractant for organisms

Figs. 1 to 3 and 7 show specific examples of flowcharts of a method for producing a repellent or attractant for organisms according to the present technology. The method for producing a repellent or attractant for organisms according to the present technology is a method in which at least an oxidative decomposition treatment step S1 is performed. In addition, an unnecessary component removal step S2, a pulverizing or cutting step S3, a secondary molding step S4, and the like can also be performed as necessary. Hereinafter, each of the steps will be described in detail.

### (1) Oxidative decomposition treatment step S1

The oxidative decomposition treatment step S1 is a step of oxidatively decomposing a part of a plastic. In the present technology, a part of a plastic is oxidatively decomposed to make it possible to generate one or more substances selected from aldehydes, ketones, carboxylic acids, alcohols, and unsaturated bond compounds from the oxidatively decomposed plastic.

As described above, to produce conventional repellents or attractants, it is necessary to first produce a substance having a repellent or attractant effect on organisms and then immobilize this substance on a solid such as a plant solid or a resin in some way.

On the other hand, in the method for producing a repellent or attractant for organisms according to the present technology, a plastic that is already in a solid state is oxidatively decomposed to make it possible to generate a substance having a repellent or attractant effect, and the substance is used as it is as a repellent or an attractant. For this reason, no technology or facility is required to extract or purify substances having a repellent or attractant effect on organisms from organisms, plants, or the like or to chemically synthesize the substances. In addition, no technology or facility is required to immobilize substances having a repellent or attractant effect on organisms on a solid such as a plant solid or a resin. Accordingly, the production method according to the present technology is a method in which a repellent or an attractant can be produced through a simple method using inexpensive raw materials.

In addition, a repellent or attractant effect produced through the production method according to the present technology is mainly composed of a plastic that can generate a substance having a repellent or attractant effect, and therefore exhibits the repellent or attractant effect stably.

In the oxidative decomposition treatment step, the oxidative decomposition proceeds by exposing the plastic to one or more selected from light, a gas, a liquid, and heat that can oxidatively decompose the plastic.

Light used for the oxidative decomposition treatment may include light having a wavelength of 10⁻⁶ to 800 nm, preferably light having a wavelength of 250 to 800 nm, more preferably light having a wavelength of 250 to 400 nm, and still more preferably light having a wavelength of 300 to 400 nm.

When performing oxidative decomposition treatment using light, a light source capable of emitting light having a desired wavelength can be used. Examples of light sources include a xenon lamp, a metal halide lamp, an ultraviolet fluorescent lamp, an ultraviolet carbon arc lamp, a sunshine carbon arc lamp, a mercury lamp, and sunlight, and these light sources can also be used alone or in a combination of two or more thereof.

As a gas used for the oxidative decomposition treatment, a gas containing oxygen and/or ozone can be used.

As a liquid used for the oxidative decomposition treatment, one or more liquids selected from water, sea water, and a hydrogen peroxide solution can be used.

When performing oxidative decomposition treatment using heat, the heating temperature is not particularly limited as long as a plastic can be oxidatively decomposed, and can be set freely. In the present technology, when performing oxidative decomposition treatment using heat, the oxidative decomposition treatment can be performed at, for example, 25°C to 300°C, preferably 50°C to 250°C, and more preferably 100°C to 200°C.

The heat treatment method is also not particularly limited as long as a plastic can be oxidatively decomposed, and a general heating method can be employed freely. In the present technology, it is possible to perform, for example, heat treatment through one or more methods selected from melt kneading, heat pressing, injection molding, sheet molding, blow molding, vacuum molding, foam molding, pressure molding, hot air treatment, hot water treatment, hot oil treatment, and heating through exposure to sunlight.

A plastic may be exposed to light, a gas, a liquid, and heat individually, but is preferably exposed to two or more thereof. For example, oxidative decomposition can be accelerated by using light and an oxidation-inducing component represented by air, oxygen, ozone, or hydrogen peroxide, with water or seawater as a medium, and further adding heat. From an economic perspective, sunlight, air, water, sea water, and heat are more suitable.

The exposure time is not particularly limited as long as it is time for which a plastic can be oxidatively decomposed, and can be set freely in consideration of the concentration, amount, and the type of substance to be exposed, the type and shape of a plastic, and other exposure conditions. The exposure time can be set to, for example, 10 minutes to 10 years, preferably 24 hours to 5 years.

The exposure location is not also particularly limited as long as it is time for which a plastic can be oxidatively decomposed, and can be set freely in consideration of the concentration, amount, and the type of substance to be exposed, the type and shape of a plastic, and other exposure conditions. For example, the exposure location may be inside a predetermined device, or may be outdoors when sunlight, sea water, or the like is used.

The plastic used in the production method according to the present technology is not particularly limited as long as one or more substances selected from aldehydes, ketones, carboxylic acids, alcohols, and unsaturated bond compounds is generated through oxidative decomposition treatment.

In the present technology, a radically polymerized polymer is preferably used as the plastic. Examples of radically polymerized polymers include polyethylene, polypropylene, polystyrene, polyvinyl chloride, ethylene vinyl acetate, polyacrylonitrile, polybutadiene, polyisoprene, polypentadiene, polycyclopentadiene, polybutene, polyisobutylene, poly-a-methylstyrene, polyvinyl toluene, polyvinyl naphthalene, polyacrylic esters, polymethacrylic esters, vinylon, polyvinyl alcohol, polyvinyl acetate, polyacrylic acid, and polymethacrylic acid, and these can be used alone or in a combination of two or more thereof. Among these, in the present technology, one or more polymers selected from polyethylene, polypropylene, polystyrene, and polyvinyl chloride are preferably used.

The shape of these plastics is not particularly limited, and the plastics may be in the form of pellets provided as raw materials, or may be molded bodies molded through one or more molding methods such as injection molding, sheet molding, blow molding, vacuum molding, foam molding, and pressure molding. In addition, they may be pellets or pulverized products of molded products.

From the viewpoint of effective use of resources, it is preferable to use, as raw materials, end materials during molding processing for a predetermined purpose or molding-processed bodies discharged and recovered from used products. In addition, molding-processed bodies that have been discarded to the ocean or a river can also be used.

Used molding-processed bodies or molding-processed bodies that have been discarded to the ocean or a river may have undergone oxidative decomposition of a plastic used in them, and, as shown in examples to be described below, some may already be in a state where one or more substances selected from aldehydes, ketones, carboxylic acids, alcohols, and unsaturated bond compounds can be generated. Accordingly, in that case, the used molding-processed bodies or the molding-processed bodies that have been discarded to the ocean or a river can be used as they are as repellents or attractants according to the present technology, or can be used as repellents or attractants by being further oxidatively decomposed or being subjected to secondary processing through the pulverizing or cutting step S3 or secondary molding step S4 to be described below. In this manner, the present technology is innovative technology that finds new value in things that are disposed of as waste.

The number of carbon atoms in aldehydes, the ketones, the carboxylic acids, the alcohols, and the unsaturated bond compounds that can be generated from the oxidatively decomposed plastic can be appropriately set according to a target repellent or attractant effect. In the present technology, the number of carbon atoms in the aldehydes, the ketones, the carboxylic acids, the alcohols, and the unsaturated bond compounds that can be generated from the oxidatively decomposed plastic is preferably set to 6 to 30 and more preferably set to 8 to 18. By setting the number of carbon atoms to 6 or more, volatilization is less likely to occur, and the sustainability, that is, the sustained releasability, of the repellent or attractant effect can be improved. In addition, by setting the number of carbon atoms to 30 or less, volatilization is likely to occur, and the repellent or attractant effect can be improved.

In addition, carbon in the aldehydes, the ketones, the carboxylic acids, the alcohols, and the unsaturated bond compounds that can be generated from the oxidatively decomposed plastic may be saturated or unsaturated, and may have any structure such as a linear branched, cyclic, or aromatic ring structure.

In the production method according to the present technology, the plastic or a molded body in which the plastic is used oxidatively decomposed to make it possible to generate one or more substances selected from aldehydes, ketones, carboxylic acids, alcohols, and unsaturated bond compounds from the oxidatively decomposed plastic, but the amount generated is not particularly limited. In the present technology, by oxidatively decomposing the plastic or a molded body in which the plastic is used, 0.001 to 10,000 pL/L of one or more substances selected from aldehydes, ketones, carboxylic acids, alcohols, and unsaturated bond compounds is preferably generated, 0.01 to 1,000 pL/L thereof is more preferably generated, and 0.1 to 100 pL/L thereof is still more preferably generated. By setting the amount generated to 0.001 pL/L or more, the repellent or attractant effect can be improved. In addition, by setting the amount generated to 10,000 pL/L or less, generation of bad odor or the like can be prevented.

Information on whether one or more substances selected from aldehydes, ketones, carboxylic acids, alcohols, and unsaturated bond compounds generated from the oxidatively decomposed plastic described above are repellent or attractive to various organisms can be obtained from books, technical papers, conference presentations, and the like. Examples of academic societies include the Japanese Society of Pestology, Pesticide Science Society of Japan, and Japan Association for Pharmaceutical Affairs Law Foundation, and examples of technical papers include scientific journals such as Pest Management Science, Insect Science, Agricultural and Biological Chemistry, Entomologia Experimentaliset Applicate. In these academic societies and technical journals, in particular, there are many studies on the repellent or attractant effect of animals (vermin) and insects (pests). Examples of vermin include monkeys, babirusas, and bears, and examples of pests include blood-sucking insects represented by mosquitoes and assassin bugs, flies that serve as a medium for Escherichia coli and the like, stink bugs that cause skin inflammation, mites, bees, and beetle-type insects that harm the growth of crops and plants.

### (2) Unnecessary component removal step S2

In the production method according to the present technology, an unnecessary component removal step S2 of removing an unnecessary component from the plastic can be performed. This unnecessary component removal step S2 is not an essential step in the present technology. However, for example, components other than target components can be removed by performing the unnecessary component removal step S2 in a case where a substance having a repellent effect and a substance having an attractant effect on the same organism are generated as one or more substances selected from aldehydes, ketones, carboxylic acids, alcohols, and unsaturated bond compounds that can be generated from an oxidatively decomposed plastic in the oxidative decomposition treatment step S1 at the same time, or in a case where harmful components, ineffective components, or the like are generated as one or more substances thereof in the oxidative decomposition treatment step S1.

As the method for removing unnecessary components in the unnecessary component removal step S2, any method can be selected freely depending on components to be removed as long as the components to be removed can be removed. Examples thereof include a method for removing unnecessary components by exposing a plastic to one or more selected from light, a gas, a liquid, and heat.

In the present technology, as the method for removing unnecessary components in the unnecessary component removal step S2, a method for removing unnecessary volatile components through heating the plastic can be selected.

When performing heat treatment, the conditions thereof can be set freely depending on components to be removed as long as the components to be removed can be removed. For example, in a case where it is preferable to remove low-temperature volatile component, only the low-temperature volatile component can be removed by heating a substance having a repellent or attractant effect at a temperature higher than or equal to a volatile temperature of the component to be removed and at a temperature lower than a volatile temperature of a substance having a repellent or attractant effect.

In the present technology, the temperature conditions for performing the heat treatment are preferably 100°C to 300°C. In addition, in the present technology, the heating time when performing the heat treatment is preferably 1 minute to 10 hours. By setting the heating time to 10 hours or less, volatilization of substances having a repellent or attractant effect can be prevented. In addition, by setting the heating time to 1 minutes or longer, the removal rate of volatile components can be increased.

In addition, as the heating method when performing heat treatment, any method can be selected freely depending on components to be removed as long as the components to be removed can be removed. In the present technology, it is possible to use, for example, a heat treatment method through one or more methods selected from melt kneading, heat pressing, injection molding, sheet molding, blow molding, vacuum molding, foam molding, pressure molding, hot air treatment, hot water treatment, hot oil treatment, and heating through exposure to sunlight.

The order of the unnecessary component removal step S2 is not particularly limited as long as it does not impair the effect of the present technology, and the unnecessary component removal step S2 may be performed before or after the oxidative decomposition treatment step S1, or before or after the pulverizing or cutting step S3 or the secondary molding step S4 which will be described below. In addition, as long as the effect of the present technology is not impaired, the unnecessary component removal step S2 can also be performed simultaneously with the oxidative decomposition treatment step S1, or with the pulverizing or cutting step S3 or the secondary molding step S4 which will be described below.

Specifically, for example, in the oxidative decomposition treatment step S1, oxidative decomposition treatment using light can be performed to generate a substance having a desired repellent or attractant effect from a plastic, and then in the unnecessary component removal step S2, heat treatment can be performed at a temperature higher than or equal to a volatilization temperature of an unnecessary component and at a temperature lower than a volatile temperature of the substance having a desired repellent or attractant effect to remove the unnecessary component (refer to Figs. 1A, 1C, and the like).

In addition, for example, in the unnecessary component removal step S2, heat treatment can be performed at a temperature higher than or equal to a volatilization temperature of an unnecessary component and at a temperature lower than a temperature at which a substance having a desired repellent or attractant effect is generated to remove the unnecessary component, and then in the oxidative decomposition treatment step S1, the heating temperature can be increased and the heat treatment can be performed at a temperature higher than or equal to a temperature at which the substance having a desired repellent or attractant effect is generated to make it possible to generate the substance having a desired repellent or attractant effect from a plastic (refer to Figs. 1B, 1D, and the like).

Furthermore, for example, by performing heat treatment at a temperature higher than or equal to a volatilization temperature of an unnecessary component and at a temperature lower than a volatile temperature of a substance having a desired repellent or attractant effect in the unnecessary component removal step S2 while performing oxidative decomposition treatment using light in the oxidative decomposition treatment step S1, it is possible to simultaneously remove the unnecessary component while making it possible to generate the substance having a desired repellent or attractant effect from a plastic (refer to Fig. 2A).

### (3) Pulverizing or cutting step S3

In the production method according to the present technology, a pulverizing or cutting step S3 of pulverizing the plastic or a molded body in which the plastic is used can be performed. In the present technology, the pulverizing or cutting step S3 is not an essential step. However, by pulverizing or cutting the plastic or a molded body in which the plastic is used, the surface area thereof increases, and the sustained-release effect of a substance having a repellent or attractant effect is enhanced. Therefore, the generation efficiency of the substance having a desired repellent or attractant effect can be improved.

As the pulverizing or cutting method in the pulverizing or cutting step S3, any method can be selected freely depending on the form of a molded body or a plastic to be pulverized or cut as long as the effect of the present technology is not impaired. Examples thereof include methods in which a hammer crusher, a wind crusher, a roll crusher, a hand crusher, and pin mill-type, exceed mill-type, impact-type, jet mill-type, grinder-type, overflow-type, ball mill-type, and cutter-type pulverizers or cutters are used. In addition, when performing pulverization, pulverization may be performed while cooling using a refrigerant such as liquid nitrogen.

The particle diameter of pulverized products or cut products after the pulverizing or cutting step S3 can be set freely as long as the effect of the present technology is not impaired. In the present technology, the particle diameter of the pulverized products or cut products after the pulverizing or cutting step S3 is preferably set to 0.1 to 50 mm. By setting the particle diameter of the pulverized products or cut products to 0.1 mm or more, it is possible to prevent dust from flying up and improve handling. In addition, by setting the particle diameter of the pulverized products or cut products to 50 mm or less, the volatilization amount of the substance having a repellent or attractant effect can be increased and the repellent or attractant effect can be improved.

The order of the pulverizing or cutting step S3 is not particularly limited as long as it does not impair the effect of the present technology, and the pulverizing or cutting step S3 may be performed before or after the oxidative decomposition treatment step S1 or unnecessary component removal step S2. In addition, as long as the effect of the present technology is not impaired, the pulverizing or cutting step S3 can also be performed simultaneously with the oxidative decomposition treatment step S1 or the unnecessary component removal step S2. When performing the secondary molding step S4 to be described below, the pulverizing or cutting step S3 is preferably performed at least before the secondary molding step S4.

Specifically, for example, the oxidative decomposition treatment step S1 can be performed to generate a substance having a desired repellent or attractant effect from a plastic, and then the pulverizing or cutting step S3 can be performed to improve the volatility of the substance having a repellent or attractant effect from the oxidatively decomposed plastic (refer to Figs. 1A, 1B, and the like).

In addition, for example, the pulverizing or cutting step S3 can be performed to increase the surface area of a plastic, and then the oxidative decomposition treatment step S1 can be performed to generate a substance having a desired repellent or attractant effect from the plastic (refer to Figs. 1C, 1D, and the like).

Furthermore, for example, a plastic can be in a state where a substance having a desired repellent or attractant effect can be generated from the plastic, and at the same time, the plastic can be pulverized or cut by performing pulverizing and cutting through an arbitrary method in the pulverizing or cutting step S3 while bringing a specific gas or liquid into contact with the plastic in the oxidative decomposition treatment step S1, and then the substance having a desired repellent or attractant effect can be heated at a temperature higher than or equal to a volatilization temperature of an unnecessary component and at a temperature lower than a temperature at which a substance having a desired repellent or attractant effect is generated in the unnecessary component removal step S2, to remove the unnecessary component (refer to Fig. 2B).

### (4) Secondary molding step S4

In the present technology, a secondary molding step S4 of molding the plastic into a desired shape can be performed. In the present technology, the secondary molding step S4 is not an essential step, but by molding the plastic into a desired shape, a repellent or attractant in a form suitable for a target product can be obtained.

The molding method in the secondary molding step S4 can be selected freely depending on the target form or type of a plastic as long as the effect of the present technology is not impaired. Examples thereof include extrusion molding, heat pressing, injection molding, sheet molding, blow molding, vacuum molding, foam molding, and pressure molding, and these can also be used in combination. In addition, after extrusion molding, pelletization or the like can also be performed using a pelletizer or the like.

The shape to be molded in the secondary molding step S4 can be designed freely depending on the form of a target product. Examples thereof include, as shown in Figs. 4 to 6, a pellet shape (refer to Fig. 4A), a plate shape (refer to Fig. 4B), a sheet shape (refer to Fig. 4C), a fibrous shape (refer to Fig. 4D), a mesh shape (refer to Fig. 5E), a tube shape (refer to Fig. 5F), a foam shape (refer to Fig. 5G), and a bead shape (refer to Fig. 5H). In addition, these can also be further processed into a desired shape. For example, it is possible to freely combine shapes such as a plate shape with a plurality of convex portions on its surface (refer to Fig. 6I), a box shape that can be used for transportation or the like (see Fig. 6J), a container shape (refer to Fig. 6K), and a container shape with pellets in it (refer to Fig. 6L).

The order of the secondary molding step S4 is not particularly limited as long as it does not impair the effect of the present technology, and the secondary molding step S4 may be performed before or after the oxidative decomposition treatment step S1 or unnecessary component removal step S2. In addition, as long as the effect of the present technology is not impaired, the secondary molding step S4 can also be performed simultaneously with the oxidative decomposition treatment step S1 or the unnecessary component removal step S2. Furthermore, when a molding method involving heat treatment is selected as the secondary molding step S4, the heat may cause oxidative decomposition of a plastic or removal of unnecessary components from the plastic. In this manner, in the present technology, by performing the secondary molding step S4, the oxidative decomposition treatment step S1 or the unnecessary component removal step S2 can also proceed at the same time. When performing the pulverizing or cutting step S3, the secondary molding step S4 is preferably performed at least after the pulverizing or cutting step S3.

Specifically, for example, after performing the oxidative decomposition treatment step S1 and, if necessary, the unnecessary component removal step S2 or the pulverizing or cutting step S3 in random order, the plastic can be molded into a desired shape by performing the secondary molding step S4 to obtain a repellent or attractant in a form suitable for a target product (refer to Figs. 1A to 1D, Figs. 2A to 2D, and Fig. 3A).

In addition, for example, after performing the secondary molding step S4 to mold the plastic into a desired shape, the oxidative decomposition treatment step S1 and the unnecessary component removal step S2 can be performed in random order (refer to Fig. 3B).

Furthermore, for example, the plastic can be oxidatively decomposed to make it possible to generate a substance having a desired repellent or attractant effect from the plastic while molding the plastic into a desired shape through molding involving heat treatment in the secondary molding step S4, and then the unnecessary component removal step S2 can be performed (refer to Fig. 3C).

In addition, for example, after performing the pulverizing or cutting step S3, the resultant can be brought into contact with a specific gas or liquid in the oxidative decomposition treatment step S1 to make it possible to generate a substance having a desired repellent or attractant effect from the plastic while molding involving heat treatment is performed in the secondary molding step S4 to mold the plastic into a desired shape and unnecessary components are removed through heat (refer to Fig. 3D). That is, the oxidative decomposition treatment step S1, the unnecessary component removal step S2, and the secondary molding step S4 can be performed at the same time.

The flowcharts of the method for producing a repellent or attractant for organisms according to the present technology shown in Figs. 1 to 3 described above are merely examples, and the steps can be performed in a different order as long as the effect of the present technology is not impaired.

In addition, each step can be performed multiple times as necessary. For example, after performing the oxidative decomposition treatment step S1, the unnecessary component removal step S2, the pulverizing or cutting step S3, and the secondary molding step S4 in this order, it is also possible to perform the oxidative decomposition treatment step S1 again as necessary (refer to Fig. 7A). For example, when using a discarded molding-processed body, oxidative decomposition treatment may have already been progressing during the molding stage or the discarding stage. In such a case, although the oxidative decomposition treatment step S1 has been substantially performed, after subjecting the discarded molding-processed body to the unnecessary component removal step S2, the pulverizing or cutting step S3, the secondary molding step S4, and the like as necessary, the oxidative decomposition treatment step S1 can also be performed again.

In addition, for example, after performing the oxidative decomposition treatment step S1 and the pulverizing or cutting step S3 in this order, the unnecessary component removal step S2 can be performed to perform molding involving heat treatment, the second oxidative decomposition treatment step S1 and the secondary molding step S4 can be performed at the same time, and then the unnecessary component removal step S2 can be performed again (refer to Fig. 7B).

### 2. Repellent or attractant for organisms

A repellent or attractant for organisms according to the present technology includes: a plastic of which a part is oxidatively decomposed to make it possible to generate one or more substances selected from aldehydes, ketones, carboxylic acids, alcohols, and unsaturated bond compounds.

Since the details on one or more substances selected from aldehydes, ketones, carboxylic acids, alcohols, and unsaturated bond compounds and details on oxidative decomposition treatment are the same as the those described in the method for producing a repellent or attractant for organisms according to the present technology described above, the description thereof will not be repeated here.

In the repellent or attractant for organisms according to the present technology, one or more other components that can be used in the repellent or attractant field can be selected and contained freely as long as the effect of the present technology is not impaired. Examples of other components include plasticizers, antioxidants, flame retardants, inorganic fillers, pigments, stabilizers, preservatives, fungicides, pigments, and fragrances.

In addition, a substance having a repellent or attractant effect can also be separately added to or held by the repellent or attractant for organisms according to the present technology. The repellent or attractant for organisms according to the present technology is in a state where substances having a repellent or attractant effect (one or more substances selected from aldehydes, ketones, carboxylic acids, alcohols, and unsaturated bond compounds) can be generated. However, for example, it is also possible to add substances having a repellent or attractant effect other than substances that can be generated to add a repellent or attractant effect on other organisms.

The specific form of the repellent or attractant for organisms according to the present technology can also be designed freely as long as the effect of the present technology is not impaired. Since the specific form of the repellent or attractant for organisms according to the present technology is the same as the form that can be molded in the secondary molding step S4 in the method for producing a repellent or attractant for organisms according to the present technology described above, the description thereof will not be repeated herein.

### 3. Method for repelling or attracting organisms

The method for producing a repellent or attractant for organisms according to the present technology is a method in which at least an oxidative decomposition treatment step S1 is performed. In addition, an unnecessary component removal step S2, a pulverizing or cutting step S3, a secondary molding step S4, and the like can also be performed as necessary. Since each step in the method for producing a repellent or attractant for organisms according to the present technology is the same as the details of each step in the method for producing a repellent or attractant for organisms according to the present technology described above, the description thereof will not be repeated herein.

### Examples

Hereinafter, the present technology will be described in more detail based on examples. The examples which will be described below show merely representative examples of the present technology, and the scope of the present technology should not be narrowly interpreted on the basis of this.

### <Example 1>

While heating general-purpose polystyrene pellets to 100°C in air, light at a wavelength of 280 nm to 450 nm was emitted with a micro UV irradiation device using a Xe arc lamp as a light source for 1 hour, and then volatile components were measured through Py-GC/MS method under measurement conditions (temperature: 60°C, irradiation time: 1 hour, atmospheric gas: air, column flow rate: 1 mL/min, split ratio: 1/10, column: "Ultra ALLOY metal capillary column" (UA1_30m (0.25Φ), 0.5 pm) manufactured by Frontier Laboratory Co., Ltd.), GC: 50 to 240°C (20°C/min)). As a result, styrene, acetophenone, and benzaldehyde were detected. The quantification by toluene conversion showed that the amount of each chemical substance generated was 3.2, 4.3, and 2.6 pL/L.

Among the chemical substances generated from a plastic in Example 1, acetophenone (boiling point: 202°C) has a repellent effect on giant assassin bugs and sirex woodwasps, and has an attractive effect on plant hoppers (rice pests) and stink bugs. In addition, benzaldehyde (boiling point: 172°C) is known to have an attractive effect on fruit flies. Therefore, it was found that, by exposing general-purpose polystyrene to air, heat, and ultraviolet light, the treated polystyrene can be used as a repellent for giant assassin bugs and sirex woodwasps and as an attractant for plant hoppers, stink bugs, and fruit flies.

### <Comparative Example 1>

General-purpose polystyrene was treated under the same conditions as those in Example 1 except that UV irradiation was not performed, and then volatile components were measured through GC/MS method. As a result, 0.04 µL/L of styrene was detected, but no aldehydes, ketones, carboxylic acids, alcohols, and unsaturated bond compounds were detected.

### <Example 2>

A float (made of foamed styrol) that had been used and collected at a fishing ground for about 1 year for oyster farming was irradiated with ultraviolet light for 1 hour under the same conditions as those in Example 1, and then volatile components were measured through Py-GC/MS method. As a result, styrene, xylene, and acetophenone were detected at 4.5, 2.1, and 3.2 µL/L, respectively.

Among the chemical substances generated from a plastic in Example 2, xylene (139°C) is known to have a repellent effect on whiteflies (infection vector of tomato yellowing gangrene virus), and therefore it was found that, by exposing the foamed styrol to sea water, air, sunlight, and ultraviolet light, the treated foamed styrol can be used as a repellent for giant assassin bugs, sirex woodwasps, and whiteflies and can be used as an attractant for plant hoppers and stink bugs.

### <Example 3>

An end material sampled from a polyvinyl chloride molded body was irradiated with light for 1 hour using the same Xe arc lamp as in Example 1 (atmospheric gas: air, temperature: 100°C), and then volatile components were measured through Py-GC/MS method. As a result, benzaldehyde, 2-ethyl-1-hexanol, and acetophenone were detected at 6.7, 12.2, and 5.5 pL/L, respectively.

Among the chemical substances generated from a plastic in Example 3, 2-ethyl-1-hexanol is known to have an attractant effect on whiteflies (infection vector of tomato yellowing gangrene virus), and therefore it was found that, by exposing the polyvinyl chloride to ultraviolet light, the treated polyvinyl chloride can be used as an attractant for fruit flies and plant hoppers and can be used as a repellent for whiteflies, giant assassin bugs, and sirex woodwasps.

### <Comparative Example 2>

A polyvinyl chloride molded body was treated under the same conditions as those in Example 3 except that UV irradiation was not performed, and then volatile components were measured through GC/MS method. As a result, no aldehydes, ketones, carboxylic acids, alcohols, and unsaturated bond compounds were detected.

### <Example 4>

An end material of an opaque high-density polyethylene sheet molded body was sampled (amount of sample: 100 pg (powder)) and irradiated with ultraviolet light at 60°C for 3 hours in an air atmosphere, and then volatile components were measured through Py-GC/MS method under measurement conditions (atmospheric gas: air, column flow rate: 1 mL/min, split ratio: 1/10, column: "Ultra ALLOY metal capillary column" (UA1_30m (0.25Φ), 0.5 pm) manufactured by Frontier Laboratory Co., Ltd.), GC: 40 to 320°C (20°C/min)). As a result, 1-hexanal, 1-octanal, and 1-decanal were detected at 4.1, 8.1, and 7.8 µL/L, respectively.

Among the chemical substances generated from a plastic in Example 4, 1-hexanal (boiling point: 129°C) is known to have an attractant effect on peach-potato aphids, and 1-octanal (boiling point: 171°C) and 1-decanal (boiling point: 207°C) are known to have an attractant effect on house dust mites (indoor mites). Therefore, it was found that, by exposing high-density polyethylene to air, heat, and ultraviolet light, the treated high-density polyethylene can be used as an attractant for peach-potato aphids and house dust mites.

### <Comparative Example 3>

An end material of a high-density polyethylene sheet was exposed to air and heat under the same conditions as those in Example 4 except that ultraviolet irradiation was not performed, and then volatile components were measured through GC/MS method. As a result, no aldehydes, ketones, carboxylic acids, alcohols, and unsaturated bond compounds were detected.

### <Example 5>

An end material of a polytank (made of polyethylene) collected on the coast of the Sea of Japan was mixed with virgin polyethylene pellets at a weight ratio of 3:7, and the mixture was kneaded to obtain pellets. The obtained pellets were used as they are to measure volatile components through GC/MS method. As a result, tetradodecane, 1-tetradecene, hexadecane, and hexadecene were detected at 15.5, 5.2, 17.8, and 0.9 pL/L, respectively.

Among the chemical substances generated from a plastic in Example 5, tetradodecane (boiling point: 253.6°C) is known to have a repellent effect on malaria mosquitoes, 1-tetradecene (boiling point: 251°C) is known to have a repellent effect on flour beetles and Mexican bean beetles, hexadecane (boiling point: 286.9°C) is known to have a repellent effect on spider mites, and hexadecene (boiling point: 274°C) is known to have a repellent effect on green tea leafhoppers. Therefore, it was found that, by exposing polyethylene to sea water, air, and sunlight, the treated polyethylene can be used as a repellent for flour beetles, Mexican bean beetles, spider mites, and green tea leafhoppers.

### <Example 6>

Volatile components of mixed plastics collected on the coast of the Pacific Ocean were measured through GC/MS method. As a result, acetaldehyde, acetic acid, and acetylacetone were detected at 2.2, 2.0, and 1.3 pL/L, respectively.

Among the chemical substances generated from a plastic in Example 6, acetaldehyde (boiling point: 20.2°C) is known to have an attractant effect on fruit flies, acetic acid (boiling point: 118°C) is known to have an attractant effect on Asian tiger mosquitoes, and acetylacetone (boiling point: 140°C) is known to have a repellent effect on sirex woodwasps, it was found that, by exposing the mixed plastics to sea water, air, and sunlight, the treated mixed plastics can be used as an attractant for fruit flies and Asian tiger mosquitoes and can be used as a repellent effect on sirex woodwasps.

### <Example 7>

Mixed plastics collected on the coast of the Pacific Ocean were heated in an oven at 120°C for 1 hour, and volatile components were measured through GC/MS method. As a result, only acetylacetone was detected.

From this result, it was found that, by exposing the mixed plastics to sea water, air, sunlight, and heat, the treated mixed plastics can be used as a repellent for sirex woodwasps.

In addition, since acetaldehyde and acetic acid detected in Example 6 described above were not detected in Example 7, it was found that acetaldehyde, acetic acid, and acetylacetone are generated by exposing the mixed plastics to sea water, air, and sunlight, but acetaldehyde and acetic acid are removed by further performing heat treatment.

From these results, it was found that, by exposing the mixed plastics to sea water, air, and sunlight, the treated mixed plastics can be used as an attractant for fruit flies and Asian tiger mosquitoes and as a repellent for sirex woodwasps, but by subjecting the mixed plastics to heat treatment, the attractant for fruit flies and Asian tiger mosquitoes can be removed.

### <Example 8>

A float (made of foamed styrol) that had been used and collected at a fishing ground for about 1 year for oyster farming was heated to 180°C using a heat press machine and thermally compressed for 10 minutes to obtain a sheet material. Volatile components generated from this sheet was measured through GC/MS method. As a result, only acetophenone was detected at 1.2 µL/L.

From this result, it was found that, by exposing the foamed styrol with sea water, air, sunlight, ultraviolet light, and heat, the treated foamed styrol can be used as a repellent for giant assassin bugs and sirex woodwasps.

In addition, since styrene and xylene detected in Example 2 described above were not detected in Example 8, it was found that styrene and xylene, and acetophenone are generated by exposing the foamed styrol to sea water, air, sunlight, and ultraviolet light, but styrene and xylene are removed by further performing heat treatment.

From these results, it was found that, by exposing the foamed styrol to sea water, air, sunlight, and ultraviolet light, the treated foamed styrol can be used as a repellent for giant assassin bugs, sirex woodwasps, and whiteflies and can be used as an attractant for plant hoppers and stink bugs, but by subjecting the foamed styrol to heat treatment, styrene having no repellent or attractant effect on organisms or xylene having a repellent effect on whiteflies can be removed.

## Claims

1. A method for producing a repellent or attractant for organisms,
wherein an oxidative decomposition treatment step in which a part of a plastic is oxidatively decomposed is performed to make it possible to generate one or more substances selected from aldehydes, ketones, carboxylic acids, alcohols, and
unsaturated bond compounds from the oxidatively decomposed plastic.

2. The method for producing the repellent or attractant for organisms according to claim 1,
wherein, in the oxidative decomposition treatment step, the oxidative decomposition proceeds by exposing the plastic to one or more selected from light, a gas, a liquid, and heat that can oxidatively decompose the plastic.

3. The method for producing the repellent or attractant for organisms according to claim 2,
wherein the light includes light with a wavelength of 10⁻⁶ to 800 nm.

4. The method for producing the repellent or attractant for organisms according to claim 2,
wherein the gas includes oxygen and/or ozone.

5. The method for producing the repellent or attractant for organisms according to claim 2,
wherein the liquid is one or more liquids selected from water, sea water, and a hydrogen peroxide solution.

6. The method for producing the repellent or attractant for organisms according to claim 1,
wherein the plastic is a radically polymerized polymer.

7. The method for producing the repellent or attractant for organisms according to claim 6,
wherein the radically polymerized polymer is one or more polymers selected from polyethylene, polypropylene, polystyrene, and polyvinyl chloride.

8. The method for producing the repellent or attractant for organisms according to claim 1,
wherein the plastic is a molded body molded through one or more molding methods selected from injection molding, sheet molding, blow molding, vacuum molding, foam molding, and pressure molding.

9. The method for producing the repellent or attractant for organisms according to claim 8,
wherein the molded body is a used molding-processed body.

10. The method for producing the repellent or attractant for organisms according to claim 9,
wherein the used molding-processed body is a molding-processed body that has been discarded to the ocean or a river.

11. The method for producing the repellent or attractant for organisms according to claim 1,
wherein the aldehydes, the ketones, the carboxylic acids, the alcohols, and the unsaturated bond compounds have 6 to 30 carbon atoms.

12. The method for producing the repellent or attractant for organisms according to claim 1,
wherein, by oxidatively decomposing the plastic or a molded body in which the plastic is used, 0.001 to 10,000 pL/L of one or more substances selected from the aldehydes, the ketones, the carboxylic acids, the alcohols, and the unsaturated bond compounds is generated.

13. The method for producing the repellent or attractant for organisms according to claim 1,
wherein an unnecessary component removal step of removing an unnecessary component from the plastic is performed.

14. The method for producing the repellent or attractant for organisms according to claim 13,
wherein, in the unnecessary component removal step, a volatile component is removed by heating the plastic.

15. The method for producing the repellent or attractant for organisms according to claim 14,
wherein the temperature for the heat treatment is 100°C to 300°C.

16. The method for producing the repellent or attractant for organisms according to claim 14,
wherein the heat treatment is performed through one or more methods selected from melt kneading, heat pressing, injection molding, sheet molding, blow molding, vacuum molding, foam molding, pressure molding, hot air treatment, hot water treatment, hot oil treatment, and heating through exposure to sunlight.

17. The method for producing the repellent or attractant for organisms according to claim 1,
wherein a pulverizing step or a cutting step of pulverizing or cutting the plastic or a molded body in which the plastic is used is performed.

18. The method for producing the repellent or attractant for organisms according to claim 17,
wherein a pulverized product after the pulverizing step or a cut product after the cutting step has a particle diameter of 0.1 to 50 mm.

19. A repellent or attractant for organisms, comprising:
a plastic of which a part is oxidatively decomposed to make it possible to generate one or more substances selected from aldehydes, ketones, carboxylic acids, alcohols, and unsaturated bond compounds.

20. A method for repelling or attracting organisms,
wherein an oxidative decomposition treatment step in which a part of a plastic is oxidatively decomposed is performed to make it possible to generate one or more substances selected from aldehydes, ketones, carboxylic acids, alcohols, and
unsaturated bond compounds from the oxidatively decomposed plastic.
